Europäisches Patentamt

(19) European Patent Office

Office européen des brevets

(11) Publication number: **0 074 242**

**A1**

# (12) EUROPEAN PATENT APPLICATION

(21) Application number: 82304590.1

(22) Date of filing: 01.09.82

(51) Int. Cl.³: **F 16 B 7/04**
**F 25 D 23/02**

(30) Priority: 04.09.81 GB 8126827

(43) Date of publication of application:
16.03.83 Bulletin 83/11

(84) Designated Contracting States:
BE DE FR IT LU NL

(71) Applicant: SCHLEGEL (UK) LIMITED
Ring Road
Seacroft Leeds, LS14 1LY(GB)

(72) Inventor: Twyford, David
43 Westhill
Dunstable Bedfordshire(GB)

(72) Inventor: Eames, David George
32 Main Street Normanton-le-Heath
Coalville Leicestershire(GB)

(74) Representative: Carpmael, John William Maurice et al,
CARPMAELS & RANSFORD 43 Bloomsbury Square
London, WC1A 2RA(GB)

(54) Jointing system for strips.

(57) The jointing system involves a jointing device and a method of joining elongate strips such as extruded plastic or rubber trim strips and sealing strips.

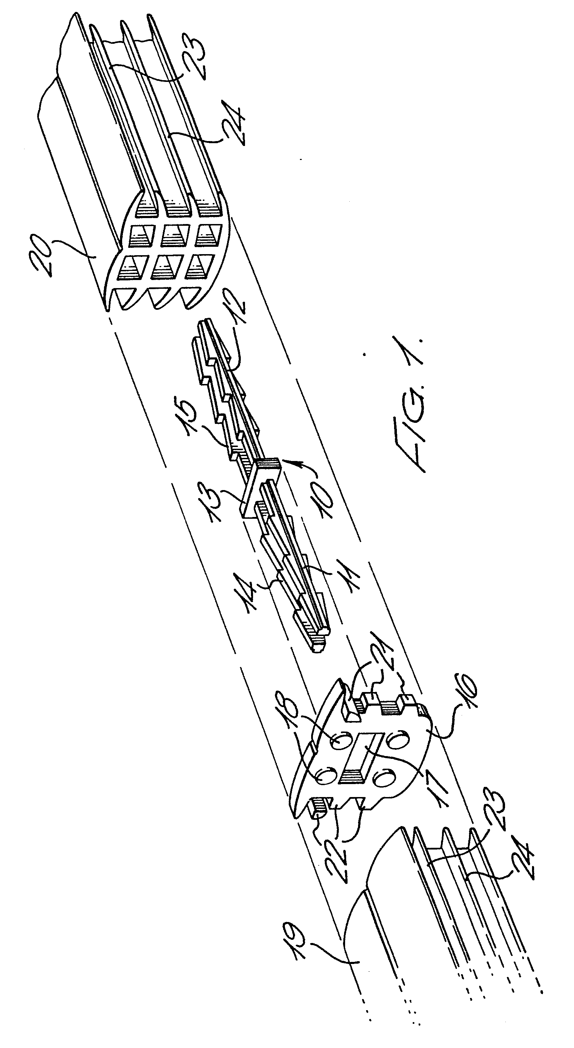

The joining device comprises a basic jointing member 10 (Figure 1) with extensions 11 and 12, on either side of a central land 13, each provided with wedge-shaped barbs 14 and 15 respectively. The barbs 14 prevent removal of the strip 19, when a joint is made, and the barbs 15 are oppositely designed to prevent removal of the sealing strip 20. The jointing member is symmetrical, so that it can be inserted either way round into the strips.

A washer 16 has a central slot 17 adapted to engage over the land 13 on the jointing member 10, and lobes 18 to engage in corresponding apertures in the ends of the strips 19 and 20. The washer has sealing projections 21 and 22 to locate with sealing fins such as 23, 24.

To assemble the joint, one end of the jointing member is inserted in the central aperture in the end of the sealing strip 20. The washer 16 is then slid over the jointing member 10 so that the land 13 is engaged in the slot 17.

The other end of the jointing member 10 is then inserted into a central aperture in the strip 19 and two strips are then compressed by exerting pressure on each towards the washer and this compression results in a firm permanent seal being effected.

It is not necessary to use any adhesive, although if a permanent joint is required adhesive may be used.

FIG 1.

EP 0 074 242 A1

TITLE MODIFIED
see front page

"JOINTING SYSTEM"

This invention relates to a jointing system and to a method of jointing elongated strips such as sealing strips, trim strips and the like.

An object of the invention is to provide a simple jointing system and method of jointing which will join two strips together mechanically without the use of sealants, adhesives, vulcanising techniques, etc.

A further object is to provide a very simple system in which a maximum of two components are employed for making a joint.

The invention may for example be applied to joining linear lengths of rubber compression seals, lengths of plastic compression seals or trim strips, and in similar situations where two lengths of strip-like material have to be joined.

The invention has particular application where the lengths of material to be joined are of a resilient nature but the invention is not restricted to that particular application.

In GB-A-1037426, US-A-3643989 and DT-OLS-1809159, hollow strip jointing dowels or connectors provided with barbed end portions are shown which push into the hollows in the strips. These, however, suffer from the disadvantage that they do not form a waterproof and tidy seal at the join of the strips.

It is also known, e.g. from US-A-3004784 to provide metal scaffold connectors having two projecting pin members for engagement in the adjacent ends of two scaffold poles or the like, which are integral with a central enlarged circular flange. These are not suitable for joining flexible strips, and, having an integral flange, can only be used to join two round tubes.

In accordance with this invention, a jointing system for joining lengths of hollow sealing strip, trim strip or the like, includes an elongated jointing member comprising a central land with extensions on each side of the land, the extensions having self-retaining features such as barbs, and a sealing washer which has an aperture shaped to receive the land on the jointing member, the external configuration of the washer at least substantially matching that of the strips to be joined, so as to form a smooth joint between the lengths of sealing strip, trim strip or the like.

Preferably, the barbs are arranged in opposite senses so that the jointing member resists removal from both of the joined strips of material and maintains the strips in sealing engagement with the washer.

The sealing washer may also have lobes adapted to engage apertures in the ends of the strips so as to locate the washer correctly between the adjacent lengths of strip. The jointing member and the barbs on the jointing member may be made, for example, by injection moulding a high-impact resistant plastic such as nylon, or glass-filled nylon, or similar material. The sealing washer is preferably an injection-moulded sponge rubber washer although a plastic material washer could equally well be used.

Alternatively, both the jointing member and the washer could be of metal if the strips to be joined are themselves metallic.

Other materials could be used to suit the materials of which the strips are made.

The jointing member is particularly advantageous when applied to a rubber compression seal strip because the resilient nature of the rubber compression seal ensures that when the jointing member is inserted into apertures in two lengths of the compression seal, with the washer between the two lengths, the washer will be under compression when the joint is completed, thus ensuring a neat and permanent joint.

From another aspect, the invention comprises a method of joining two lengths of hollow sealing strip, trim strip or the like, comprising inserting a barbed extension of a jointing member into one apertured end of the strip, sliding a washer which has an external profile at least substantially matching that of the two lengths of strip to be joined and an aperture adapted to fit over a land on a jointing member, onto the jointing member, and then inserting the other extension of the jointing member into an aperture in the other strip, and pushing the two ends of the strips towards each other so that the jointing member is firmly gripped within the strips by the barbs engaging in the apertures in the strips and the washer is under compression from the resilient nature of the strips.

If the strips are not already square at their ends they must be cut squarely first before making the joint.

A further feature of this invention is that the jointing member is completely symmetrical so that it can be inserted either way round into the strips.

The jointing member may be used to join a straight length of strip to a straight length or to create a T-joint or to create a cross-joint, or any other kind of joint between two strips.

Several embodiments of jointing system according to the invention are now described by way of example with reference to the accompanying drawings, in which:-

FIGURE 1 is an exploded isometric view of a jointing system and two strips of rubber compression sealing material which are to be joined;

FIGURE 2 is a side view of the assembled joint when uncompressed;

FIGURE 3 is a side view of the assembled joint when compressed;

FIGURE 4 is a diagrammatic illustration of a linear joint between two lengths of sealing strip;

FIGURE 5 is a similar view of a T-joint;

FIGURE 6 illustrates a cross-joint, and

FIGURES 7 & 8 are end views of two alternative strips which could be joined in accordance with the present invention.

Referring to the drawings, Figure 1 shows a basic jointing member 10 which comprises jointing extensions 11 and 12 on either side of a central land 13. Extensions 11 and 12 are each provided with wedge-shaped barbs 14 and 15 respectively. It will be noted that the barbs 14 are so orientated that they will prevent removal of the strip shown on the left of the drawing when a joint is made and the barbs 15 are oppositely orientated so that they will prevent removal of the sealing strip shown on the right of the drawing. The jointing member is symmetrical, i.e. non-handed, so that it can be inserted either way round into the strips. As shown, each extension 11 and 12 has two fingers, one for insertion in respective retention apertures in the strips.

A washer 16 is used with the jointing member 10. The washer has a central aperture 17 adapted to engage over the land 13 on the jointing member 10. It also has lobes 18 adapted to engage in corresponding apertures in the ends of the strips 19 and 20. The washer has sealing projections 21 and 22 adapted to locate with sealing fins such as 23, 24 on the strips to be joined. Accordingly, the external configuration of the washer 16 matches the external configuration of the two strips 19 and 20 to be joined.

To assemble the joint, one end of the jointing member 10 is inserted in the central apertures in the end of the sealing strip 20 after the end of the sealing strip 20 has been cut square. The washer 16 is then slid over the jointing member 10 so that the land 13 is engaged in the slot 17.

The other end of the jointing member 10 is then inserted into the central apertures in the strip 19 and two strips are then compressed by exerting pressure on each towards the washer 16 and this compression results in a firm permanent seal being effected, the jointing member being held firmly in position within the strips by means of the lands 14 and 15.

It is not necessary to use any adhesive, although if a permanent joint is required adhesive may be used.

The mechanical seal between the two lengths of rubber compression seal is quite effective for all normal usage.

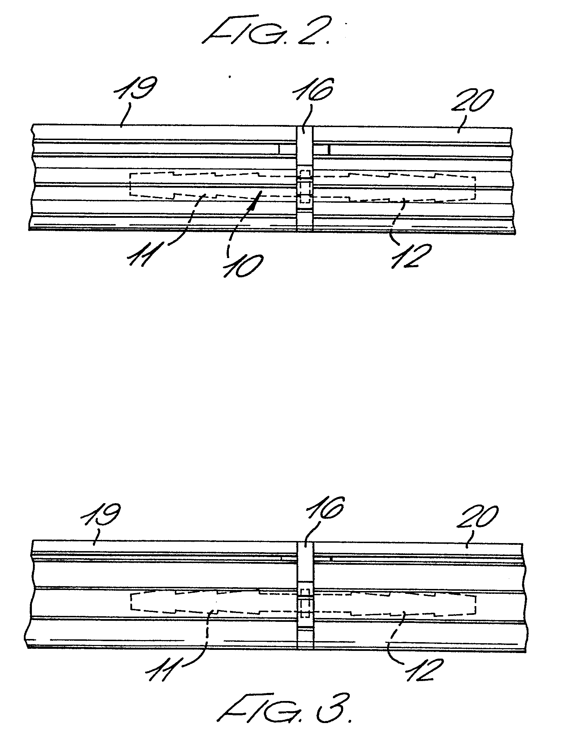

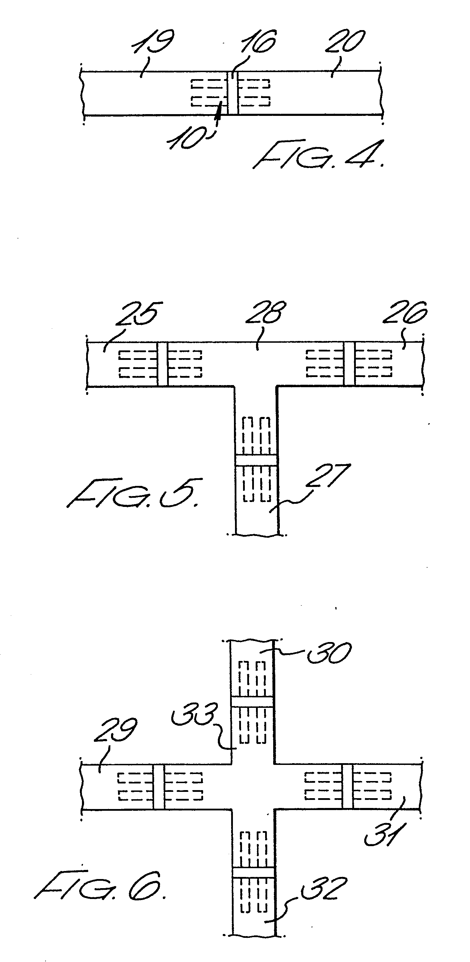

The assembled joint when in the uncompressed state is shown in Figure 2 and the effect of compressing the joint is illustrated in Figure 3.

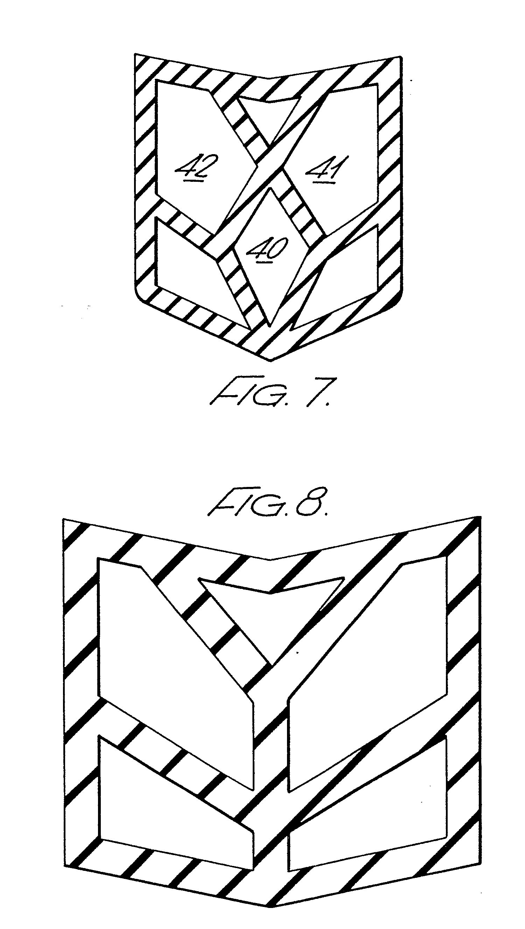

The jointing system in accordance with this invention may be used, for example, as illustrated in Figure 4 to make a linear joint between two strips 19 and 20.

Alternatively, three jointing members 10 may be employed as shown in Figure 5 to make a T-joint between three strips 25, 26 and 27 and a T-joint of moulded rubber 28.

Again, as shown in Figure 6, four of the jointing members may be used to join strips 29, 30, 31 and 32 by means of a moulded rubber cross 33.

Two alternative strips which can be joined in accordance with the present invention are shown in Figures 7 and 8. The central passageways in these strips differ from those in the strips 19 and 20 of Figure 1, and the jointing extensions 11 and 12 shown in Figure 1 will therefore have to be of a different construction for use with the strips of Figures 7 and 8. For example, each extension may only have a single barbed finger shaped to fit into aperture 40 in the strip of Figure 7, or there may be two suitably shaped barbed fingers to fit in apertures 41 and 42. Similar considerations apply for the construction of strip shown in Figure 8. It will of course be appreciated that hollow strips of various different cross-sections can be joined using the system of this invention. In all cases, special sealing washers will be required to match the external shape of the strips, and the jointing member will have to be designed so that its end extensions fit into the strips to be joined.

In the above-described jointing systems, the strips to be joined have been described as being hollow. It is envisaged, however, that the strips may be formed of a soft material in the centre, e.g. sponge rubber, and that the barbs on the jointing member may be totally embedded in the soft material. The word "hollow" in the appended claims should be interpreted to embrace this construction.

CLAIMS 0074242

1. A jointing system for joining lengths of sealing strip, trim strip or the like, including an elongated jointing member having a central land with extensions on each side of the land, the extensions having self-retaining features, characterised in that a sealing washer (16), which has an aperture (17) shaped to receive the land (13) on the jointing member (10) is provided, the external configuration of the washer (16) at least substantially matching that of the strips to be joined so as to form a smooth joint between the lengths of sealing strip, trim strip or the like (19,20).

2. A jointing system according to claim 1 characterised in that the self-retaining features are barbs (14,15).

3. A jointing system according to claim 1 or 2 characterised in that the sealing washer (16) has lobes (21,22) adapted to engage apertures in the ends of the strips (19,20) so as to locate the washer (16) correctly between the adjacent lengths of strip.

4. A jointing system according to any one of claims 1-3 characterised in that the sealing washer (16) is an injection moulded sponge rubber washer.

5. A jointing system according to any one of claims 1-3 characterised in that the sealing washer (16) is made of a plastics material.

6. A jointing system according to any one of claims 1-3 characterised in that both the jointing member (10) and the washer (16) are made of metal.

7. A jointing system according to any one of claims 1-5 in combination with two lengths of resiliently deformable strip (19,20) the jointing member (10) having its respective extensions (14,15) inserted into apertures in the two lengths of the strip (19,20), with the washer (16) between the two lengths, the washer being under compression, thus ensuring a neat and permanent joint.

8.     A method of joining two lengths of sealing strip, trim strip or the like, comprising inserting a barbed extension of a jointing member into one apertured end of one strip and then inserting the other extension of the jointing member into an aperture in the other strip, and pushing the two ends of the strips towards each other so that the jointing member is firmly gripped within the strips by the barbs engaging in the apertures of the strips characterised in that a washer (16) which has an external profile at least substantially matching that of the two lengths of strip (19,20) and has an aperture (17) adapted to fit over a land on the jointing member (1), is slid onto the jointing member (10) so that when the two strips (19,20) are joined, the washer (16) is under compression from the resilient nature of the strips (19,20).

9.     A method according to claim 11 characterised in that the ends of the strips (19,20) are cut squarely before making the joint.

FIG. 1.

1/4

0074242

FIG. 2.

FIG. 3.

FIG.4.

FIG.5.

FIG.6.

FIG. 7.

FIG. 8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | F 16 B 7/04 |
| D,A | GB-A-1 037 426 (MAX BAERMANN) *Figures 14-16,18-20; claims 2,7; page 2, lines 82-90; page 3, lines 91-92; page 5, lines 8-77* | 1,2,6 9 | F 25 D 23/08 |
| | --- | | |
| D,A | US-A-3 004 784 (M.M.SELBY) *Figures 4,5,7,8; claim 1; column 2, line 50 - column 3, line 28* | 1,2,7 9 | |
| | --- | | |
| D,A | DE-A-1 809 159 (ALU-THERM W.MAYER & CO.) *Claims 1,10,14; page 2, paragraph 4; page 7, paragraphs 3,4; figures 1,2,4,5* | 1,2,6 9 | |
| | --- | | **TECHNICAL FIELDS SEARCHED (Int. Cl. ³)** |
| D,A | US-A-3 643 989 (E.SATTLER) | | |
| | ----- | | F 16 B F 25 D E 04 B |

The present search report has been drawn up for all claims

| Place of search THE HAGUE | Date of completion of the search 10-12-1982 | Examiner DE LA MORINERIE B.M. |
|---|---|---|